# EUROPÄISCHE PATENTSCHRIFT

(11) **EP 2 655 137 B1**
(45) Veröffentlichungstag und Bekanntmachung des Hinweises auf die Patenterteilung: **08.04.2015**
(21) Anmeldenummer: 11808565.3
(22) Anmeldetag: 14.12.2011
(51) Int. Cl.: B60R 25/00, E05B 19/04, G07C 9/00

(54) **ELEKTRONISCHER SCHLÜSSEL**
ELECTRONIC KEY
CLÉ ÉLECTRONIQUE

(30) Priorität: 21.12.2010 DE 102010061457
(43) Veröffentlichungstag der Anmeldung: 30.10.2013
(60) Teilanmeldung: 15157567.7
(73) Patentinhaber: Huf Hülsbeck & Fürst GmbH & Co. KG, 42551 Velbert (DE)
(72) Erfinder: MÜLLER, Ulrich, 42549 Velbert (DE)
(86) Internationale Anmeldenummer: PCT/DE2011/075309
(87) Internationale Veröffentlichungsnummer: WO 2012/089204

(56) Entgegenhaltungen:
- EP-A1- 0 577 878
- EP-A2- 1 944 818
- WO-A1-2008/040269
- WO-A1-2009/124572
- WO-A1-2009/127227
- DE-A1-102006 046 801
- JP-A- 2004 052 471
- JP-A- 2009 293 247

## Beschreibung

Die Erfindung betrifft einen elektronischen Schlüssel, mit dessen Hilfe ein Schloss, insbesondere ein Kraftfahrzeugschloss eines Kraftfahrzeugs, drahtlos, beispielsweise per Funk, geöffnet und/oder geschlossen werden kann.

Aus DE 10 2006 046 801 A1 ist ein elektronischer Schlüssel bekannt, bei dem eine Gehäuseschale zur Aufnahme einer Schaltungselektronik einen Schüsselschacht zur Aufnahme eines Schlüsselschafts eines Notschlüssels aufweist. Die Gehäuseschale weist ferner ein Batteriefach auf, in das eine Knopfbatterie zur Energieversorgung der Schaltungselektronik eingesetzt ist. Die Knopfbatterie ist von einem Batteriefachdeckel abgedeckt. Der Batteriefachdeckel weist einen Schacht auf, der einen Teil des Schlüsselschachts ausbilden kann. Hierzu kann der Batteriefachdeckel gegen eine Federkraft einer an der Batterie anliegenden Kontaktfeder in die Gehäuseschale eingedrückt werden, wonach der Schlüsselschaft erst in den Schacht eingeschoben werden kann. Nach dem Loslassen des Batteriefachdeckels drückt die Kontaktfeder den Schacht des Batteriefachdeckels gegen den Schlüsselschaft, wodurch der in den Schacht aufgenommene Schlüsselschaft für den Batteriefachdeckel eine Verliersicherung ausbildet.

Aus der WO2008040269A1 ist ein elektronischer Schlüssel bekannt, welcher ein Gehäuse und einen Batteriefachdeckel aufweist, wobei ein Notschlüssel den Batteriefachdeckel gegen eine Dichtung drückt und so für eine Abdichtung gegen Feuchtigkeitseindringung in das Batteriefach sorgt.

Es besteht ein ständiges Bedürfnis das Risiko eines Ausfalls der Funktionsfähigkeit eines elektrischen Schlüssels zu reduzieren.

Es ist die Aufgabe der Erfindung einen elektrischen Schlüssel zu schaffen, der ein geringes Risiko eines Ausfalls der Funktionsfähigkeit ermöglicht.

Die Lösung der Aufgabe erfolgt erfindungsgemäß durch die Merkmale des Anspruchs 1. Bevorzugte Ausgestaltungen der Erfindung sind in den Unteransprüchen angegeben.

Der erfindungsgemäße elektronischer Schlüssel zum drahtlosen Betrieb eines Schlosses, insbesondere Kraftfahrzeugschloss weist eine Gehäuseschale zur zumindest teilweisen Aufnahme einer Schaltungselektronik für den drahtlosen Betrieb des Schlosses auf, wobei die Gehäuseschale ein Batteriefach zur Aufnahme einer Batterie zur Energieversorgung der Schaltungselektronik aufweist. Zusätzlich ist ein Batteriefachdeckel zum Abdecken der in dem Batteriefach aufgenommenen Batterie und ein einen in die Gehäuseschale einsteckbaren Schlüsselschaft aufweisender Notschlüssel zum mechanischen Betrieb des Schlosses vorgesehen, wobei der Schlüsselschaft zwischen einer Einführposition, in welcher der Schlüsselschaft an einem Schlüsselschacht der Gehäuseschale angesetzt ist, und einer Endposition, in welcher der Schlüsselschaft in dem Schlüsselschacht sicher aufgenommen ist, bewegbar ist. Erfindungsgemäß ist zwischen der Gehäuseschale und dem Batteriefachdeckel eine Dichtung zum Schutz der Batterie vor Umwelteinflüssen vorgesehen, wobei der Batteriefachdeckel eine Anlagefläche zum direkten Kontakt an dem Schlüsselschaft aufweist und der Schlüsselschaft in der Endposition über die Anlagefläche des Batteriefachdeckels eine Anpresskraft auf die Dichtung ausübt.

Der Schlüsselschaft des Notschlüssels kann beim Einführen in den Schüsselschacht der Gehäuseschale über die Anlagefläche eine Kraft in den Batteriefachdeckel einleiten, um die Dichtung zwischen dem Batteriefachdeckel und der Gehäuseschale zu verpressen, so dass sich automatisch eine hohe Dichtheit ergeben kann, aufgrund dessen der elektronische Schlüssel zumindest im Bereich des Batteriefachs wasserdicht sein kann. Das Risiko eines Ausfalls der Funktionsfähigkeit des elektrischen Schlüssels, beispielsweise durch Wassereintritt, ist dadurch reduziert. Ferner wird berücksichtigt, dass eine häufige Situation, in welcher der Notschlüssel benötigt wird, vorliegt, wenn die Batterieleistung der Batterie zum ordnungsgemäßen Gebrauch des elektronischen Schlüssels nicht mehr ausreicht. Die Verwendung des Notschlüssels ermöglicht dadurch einen einfachen Zugang zur Batterie im Batteriefach, um die Batterie schnell und einfach austauschen zu könne.

Der Batteriefachdeckel kann durch den Schlüsselschaft verklemmt, verkeilt und/oder arretiert werden. In der Endposition kann der Schlüsselschaft derart von der Gehäuseschale aufgenommen sein, dass der Notschlüssel nicht von alleine, beispielsweise aufgrund seines Eigengewichts, aus der Gehäuseschale herausfallen kann. Beispielsweise ist der Schlüsselschaft reibschlüssig von der Gehäuseschale gehalten und/oder über ein Halteelement, beispielsweise ein Clip einer Clipverbindug, formschlüssig arretiert. In der Einführposition befindet sich der Schlüsselschaft beim Einstecken in die Gehäuseschale mit seiner Spitze kurz vor dem Schlüsselschacht und wird gerade in den Schlüsselschaft eingefädelt. Nach dem Verlassen der Einführposition in Einsteckrichtung ist die weitere Bewegung des Schlüsselschafts durch den Schlüsselschacht begrenzt und insbesondere geführt. Der Schlüsselschaft kann beispielsweise mit einem im Wesentlichen longitudinalem Bewegungsanteil in Richtung der Erstreckung des Schlüsselschafts in den Schlüsselschacht der Gehäuseschale eingeschoben werden und anschließend durch eine Schwenkbewegung quer zur longitudinalen Erstrecken des Schlüsselschafts und/oder eine Drehung um eine Drehachse entlang der longitudinalen Erstreckung des Schlüsselschafts eine Kraft auf die Anlagefläche des Batteriefachdeckels ausüben. Dadurch kann der Batteriefachdeckel mit der Anpresskraft über die Dichtung gegen die Gehäuseschale gedrückt werden, wobei der Batteriefachdeckel über die Dichtung direkt mit der Gehäuseschale oder über mindestens ein weiteres zwischengeschaltetes Bauteil, beispielsweise eine zur Gehäuseschale korrespondierende Gegenschale, indirekt mit der Gehäuseschale in Wirkverbindung stehen kann.

Die Schaltungselektronik kann zwischen der Gehäuseschale und einer zur Gehäuseschale korrespondierende Gegenschale aufgenommen sein, wobei die Gehäuseschale und/oder die Gegenschale selber innerhalb eines weiteren Bauteils vorgesehen sein können. Die Schaltungselektronik kann einen Sender/Empfänger aufweisen, um drahtlos, beispielsweise per Funk, mit einem elektronischen Schloss, insbesondere Kraftfahrzeugschloss eines Kraftfahrzeugs, kommunizieren zu können. Dadurch können eine Identifizierung und/oder eine Autorisierung zum Öffnen und/oder Schließen des Schlosses überprüft werden und ein Öffnen und/oder Schließen des Schlosses eingeleitet oder verweigert werden. Die Batterie kann eine wiederaufladebare Batterie (Akkumulator) sein und/oder ist vorzugsweise als bauraumsparende Knopfbatterie ausgestaltet. Die Dichtung ist beispielsweise eine ringförmige Schnurdichtung, die vorzugsweise aus einem formveränderlichen, insbesondere elastischen Material hergestellt ist. Die Dichtung kann vorzugsweise gummielastisch sein und sich bei der Aufbringung der Anpresskraft verformen, um eine möglichst hohe Dichtwirkung bereitstellen zu können.

Vorzugsweise weist der Batteriefachdeckel eine insbesondere ösenförmige Lasche zur Ausbildung der Anlagefläche auf. Die Lasche kann beispielsweise L-förmig oder U-förmig ausgestaltet sein. Über die Lasche kann der Kraftfluss von dem Schlüsselschaft zum Batteriefachdeckel verlaufen. Insbesondere kann die Anlagefläche im Wesentlichen parallel zu einer von dem Batteriefach wegweisenden Außenfläche des Batteriefachdeckels verlaufen. Mit Hilfe der Lasche ist es ohne konstruktive Schwierigkeiten möglich den Batteriefachdeckel auf die Gehäuseschale zu zu ziehen. Es ist nicht erforderlich den Batteriefachdeckel nach außen gegen eine Hinterschneidung zu drücken.

Insbesondere bildet die Anlagefläche des Batteriefachdeckels einen Teil einer Begrenzung des Schlüsselschachts aus. Die Anlagefläche kann in die Ausbildung des Schlüsselschachts integriert werden. Vorzugsweise erstreckt sich Anlagefläche zunächst etwas in den Schlüsselschacht hinein, so dass der Schlüsselschaft die Anlagefläche beim Einstecken in die Gehäuseschale wegdrücken kann und dadurch die zum Verpressen der Dichtung erforderliche Anpresskraft aufbaut. Insbesondere kann der Schlüsselschaft durch seine Bewegung im Schlüsselschacht der Gehäuseschale automatisch in eine insbesondere ösenförmige Lasche des Batteriefachdeckels eingefädelt werden, wobei die Lasche die Anlagefläche ausbildet.

Erfindungsgemäß ist der Schlüsselschaft derart ausgeformt, dass sich die von dem Schlüsselschaft auf die Anlagefläche des Batteriefachdeckels aufbringbare Kraft zwischen der Einführposition und der Endposition erhöht. Insbesondere kann sich die von dem Schlüsselschaft auf den Batteriefachdeckel aufgebrachte Kraft allmählich erhöhen, so dass sich die Anpresskraft auf die Dichtung im Wesentlichen gleichmäßig erhöhen kann. Ein sprunghafter Anstieg der Anpresskraft kann vermieden werden, so dass sich die Dichtung unter der sich erhöhenden Anpresskraft allmählich verformen kann und dadurch eine besonders hohe Dichtwirkung bereitstellen kann.

In einer bevorzugten Ausführungsform ist vorgesehen, dass der Schlüsselschacht eine Drehung des Schlüsselschaft bei einer Bewegung zwischen der Einführposition und der Endposition ermöglicht und/oder erzwingt. Der Schlüsselschaft kann beispielsweise durch eine gewundene Schachtführung des Schlüsselschafts zu einer Drehung um seine longitudinale Erstreckung gezwungen werden. Durch die Drehung des Schlüsselschafts kann ausgenutzt werden, dass der Schlüsselschaft in der Regal im Querschnitt recheckig ist, so dass der Schlüsselschaft mit seiner kurzen Erstreckung zwischen der Gehäuseschale und dem Batteriefachdeckel ohne großen Widerstand in den Schlüsselschacht eingeführt werden kann und nach einer Drehung von beispielsweise bis zu 90° +/- 5° in der Endposition mit seiner breiten Erstreckung zwischen der Gehäuseschale und dem Batteriefachdeckel positioniert sein kann. Ein zuvor vorhandenes Spiel kann dadurch eliminiert werden, so dass der Schlüsselschaft reibschlüssig, insbesondere mit Presspassung, in der Gehäuseschale aufgenommen ist. In diesem Zustand kann der Schlüsselschaft den Batteriefachdeckel verklemmen und/oder arretieren und gleichzeitig eine hinreichende Anpresskraft über den Batteriefachdeckel an die Dichtung aufbringen.

Insbesondere ist der Schlüsselschaft mit einem Schlüsselkopf verbunden, wobei der Schlüsselkopf in der Endposition des Schlüsselschafts oberflächenbündig in den Formverlauf der Gehäuseschale integriert ist. Über den Schlüsselkopf kann eine hinreichende Hebellänge bereitgestellt werden, um den Schlüsselschaft innerhalb der Gehäuseschale zu verdrehen. Insbesondere kann über die Hebelwirkung des Schlüsselkopfs eine ausreichende Anpresskraft auf die Dichtung ermöglicht werden. Insbesondere kann der Schlüsselschaft leicht innerhalb der Gehäuseschale mit Presspassung reibschlüssig verklemmt werden. Dadurch, dass der Schlüsselkopf in den Formverlauf integriert ist, ergibt sich für den Benutzer eine intuitiv zu erfassende Endposition, in welcher der Benutzer den Notschlüssel nicht mehr weiter drehen würde. Gleichzeitig ermöglicht der Schlüsselkopf eine einfache Handhabung des Notschlüssels, beispielsweise wenn die Batterieleistung zu niedrig für den Gebrauch der Schaltungselektronik ist und das Schloss von Hand mit Hilfe des Notschlüssels geöffnet und/oder geschlossen werden muss.

Vorzugsweise weist die Gehäuseschale und/oder der Batteriefachdeckel mindestens eine Rampe zur Zwangsführung des Schlüsselschafts, insbesondere zur Erhöhung der von dem Schlüsselschaft aufbringbaren Anpresskraft auf die Dichtung, auf. Durch die Rampe kann ein Spiel zwischen dem Schlüsselschaft und der Gehäuseschale und/oder dem Batteriefachdeckel reduziert und insbesondere eliminiert werden. Durch die Rampe kann der Schlüsselschaft auf die Anlagefläche des Batteriefachdeckels gedrückt werden und/oder die auf die Anlagefläche aufbringbare Kraft erhöht werden. Insbesondere kann durch die Rampe eine Relativbewegung des Batteriefachdeckels relativ zur Gehäuseschale erzwungen werden, wodurch die Dichtung mit einer entsprechend hohen Anpresskraft verquetscht werden kann.

Besonders bevorzugt ist der Batteriefachdeckel um eine Schwenkachse schwenkbar mit der Gehäuseschale verbunden, wobei das Batteriefach zwischen der Schwenkachse und dem Schlüsselschacht vorgesehen ist. Der Batteriefachdeckel kann insbesondere über einen in einen Schlitz eingesetzten Ansatz in einem begrenzten Winkelbereich verschwenkt werden.

Dadurch, dass das Batteriefach zwischen der Schwenkachse und dem Schlüsselschacht vorgesehen ist, kann über den Hebeleffekt bei einer durch das Einführen des Schlüsselschafts verursachten Schwenkbewegung des Batteriefachdeckels eine entsprechend hohe Anpresskraft im Bereich des Batteriefachs erreicht werden. Ferner wird ein frei abstehender Ansatz, der entsprechend stark zurückfedern kann, vermieden. In der Endposition des Schlüsselschafts kann der Batteriefachdeckel sowohl im Bereich der Schwenkachse als auch im Bereich der des Schlüsselschachts eingespannt sein und die auf die Batterie und/oder auf die Dichtung aufgebrachten Kräfte abtragen.

Insbesondere weist die Gehäuseschale ein in dem Batteriefach vorgesehenes Federelement, insbesondere eine Kontaktfeder zur elektrischen Kontaktierung der Batterie, auf, wobei durch das Federelement eine entgegen der von dem Schlüsselschaft aufgebrachten Anpresskraft gerichtete Federkraft auf die Batterie aufbringbar ist. Mit Hilfe des Federelements kann die Batterie direkt oder indirekt gegen den Batteriefachdeckel gedrückt werden. In der Endposition des Schlüsselschafts kann dadurch der Batteriefachdeckel die Batterie mit einer entsprechenden Kraft gegen die elektrischen Kontakte drücken und dadurch eine sichere elektrische Kontaktierung gewährleisten.

Vorzugsweise ist der Schlüsselschaft aus einem im Querschnitt im Wesentlichen recheckigen Grundkörper mit zwei einander gegenüberliegenden Schmalseiten hergestellt, wobei der Schlüsselschaft in der Endposition mit einer der Schmalseiten an der Anlagefläche des Batteriefachdeckels und mit der anderen Schmalseite an der Gehäuseschale anliegt. Ein zuvor vorhandenes Spiel zwischen dem Schlüsselschaft und der Gehäuseschale und/oder dem Batteriefachdeckel kann durch eine einfache Drehung innerhalb des Schlüsselschachts eliminiert werden, so dass der Schlüsselschaft reibschlüssig, insbesondere mit Presspassung, in der Gehäuseschale aufgenommen ist. In diesem Zustand kann der Schlüsselschaft den Batteriefachdeckel verklemmen und/oder arretieren und gleichzeitig eine hinreichende Anpresskraft über den Batteriefachdeckel an die Dichtung aufbringen.

Nach einer alternativen Ausführungsform der Erfindung kann vorgesehen sein, dass der Schlüsselschacht eine longitudinale Führung des Schlüsselschafts bei einer Bewegung zwischen der Einführposition und der Endposition ermöglicht und/oder erzwingt.

Des Weiteren kann vorgesehen sein, dass jeder Lasche eine Öffnung zugeordnet ist und die Öffnungen der jeweiligen Laschen zur Durchführung des Schlüsselschafts unterschiedlich groß zueinander ausgebildet sind.

Eine besonders gute und zuverlässige Abdichtung des elektronischen Schlüssels ist sichergestellt, wenn die Anlagefläche der Laschen im Querschnitt in Einschubrichtung E des Schlüssels einen schrägen Verlauf aufweisen.

Nach einer weiteren Ausgestaltung des elektronischen Schlüssels ist vorgesehen, dass zumindest in der Endposition der Schlüsselschaft mit mindestens einer Lasche eine keilförmige Verbindung aufweist, welche zur Erhöhung der von dem Schlüsselschaft aufbringbaren Anpresskraft auf die Dichtung dient.

Um ein Herausfallen des Notschlüssels auch bei größeren Erschütterungen auszuschließen, ist der Schlüssel zusätzlich mittels einer durch den Benutzer lösbaren Rastverbindung mit dem Schlüsselschacht und/oder der Gehäuseschale kraftschlüssig und/oder formschlüssig verbindbar.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können.

Es zeigen:
Fig. 1: eine schematische teilweise Darstellung verschiedener Einzelteile eines erfindungsgemäßen elektronischen Schlüssels,
Fig. 2: eine schematische Schnittansicht des elektronischen Schlüssels aus Fig. 1 im zusammengesetzten Zustand,
Fig. 3: eine schematische Längsschnittansicht eines erfindungsgemäßen elektronischen Schlüssels in einer zweiten Ausführungsform,
Fig. 4: eine schematische Längsschnittansicht eines erfindungsgemäßen elektronischen Schlüssels in einer dritten Ausführungsform und
Fig. 5: eine schematische Querschnittansicht eines erfindungsgemäßen elektronischen Schlüssels in einer dritten Ausführungsform.

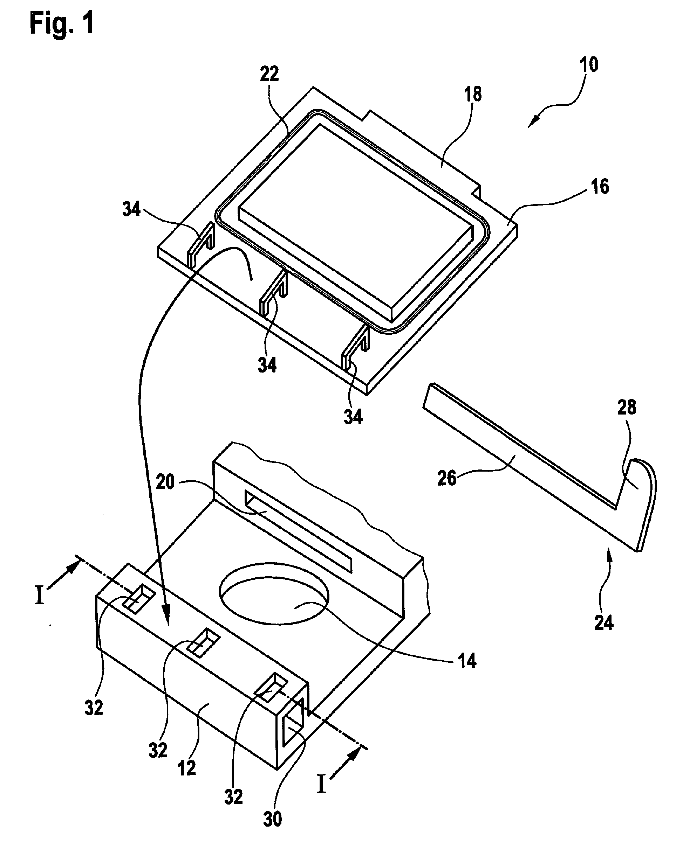

Der in Fig. 1 teilweise dargestellte elektronische Schlüssel 10 weist eine Gehäuseschale 12 auf, die eine nicht dargestellte Schaltungselektronik aufnehmen kann. Die Gehäuseschale 12 weist ein Batteriefach 14 auf, in das eine nicht dargestellte Batterie eingesetzt werden kann. Das Batteriefach 14 kann mit Hilfe eines Batteriefachdeckels 16 abgedeckt werden. Der Batteriefachdeckel 16 weist einen Ansatz 18 auf, der in einen korrespondierenden Schlitz 20 der Gehäuseschale 12 eingesetzt werden kann und dadurch eine begrenzte Schwenkbarkeit des Batteriefachdeckels 16 ermöglicht. Im dargestellten Ausführungsbeispiel ist mit dem Batteriefachdeckel 16 eine Dichtung 22 verbunden, die gegen die Gehäuseschale 12 gedrückt werden kann, um das Batteriefach 16 wasserdicht abzudichten.

Ferner ist ein Notschlüssel 24 vorgesehen, der einen Schlüsselschaft 26 aufweist. Mit dem Schlüsselschaft 26 ist einstückig ein Betätigungsansatz 28 verbunden, der mit einem nicht dargestellten Schlüsselkopf umspritzt sein kann. Der Notschlüssel 24 kann mit seinem

Schlüsselschaft 26 in einen Schlüsselschacht 30 der Gehäuseschale 12 eingesteckt werden. Mit dem Schlüsselschacht 30 sind Öffnungen 32 verbunden, in die ösenförmige Laschen 34 des Batteriefachdeckels 16 eingesteckt werden können.

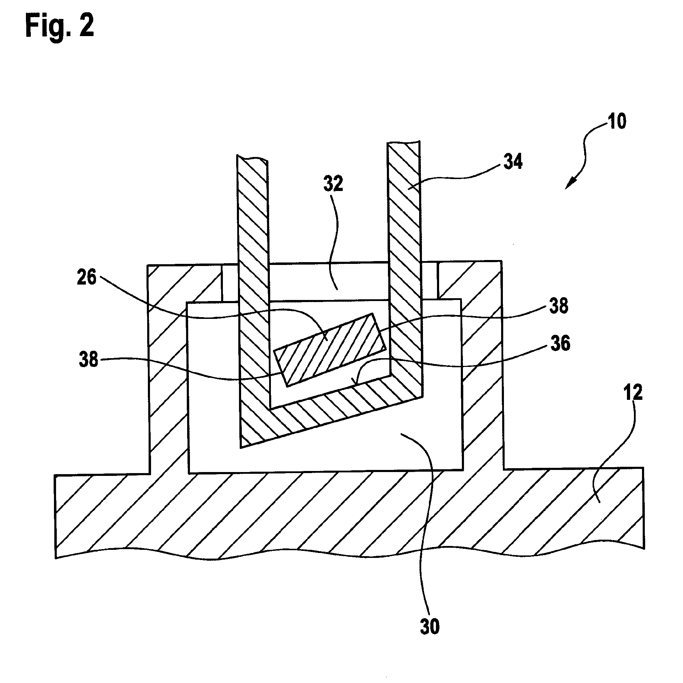

Wie in Fig. 2 dargestellt ragen die Laschen 34 bis in den Schlüsselschacht 30 hinein, so dass der Schlüsselschaft 26 in die Laschen 34 eingefädelt werden kann. Der im Querschnitt im Wesentlichen rechteckige Schlüsselschaft 26 kann an einer durch die Lasche 34 ausgebildeten Anlagefläche 36 anliegen und durch eine Drehung um seine longitudinale Achse mit einer Schmalseite 38 an der Anlagefläche 36 und mit einer anderen Schmalseite 38 an einer Wand des Schlüsselschachts 30 anliegen. Dadurch wird die Lasche 34 weiter in den Schlüsselschacht 30 hineingezogen, so dass von dem Schlüsselschaft 26 eine Kraft auf den Batteriefachdeckel 16 aufgebracht werden kann. Dadurch erhöht sich eine von dem Batteriefachdeckel 16 auf die Dichtung 22 aufgebrachte Anpresskraft, da die Dichtung zwischen dem Batteriefachdeckel 16 und der Gehäuseschale 12 verquetscht wird. Im dargestellten Ausführungsbeispiel ist die Anlagefläche 36 im Vergleich zur übrigen Geometrie des Schlüsselschachts 30 angeschrägt, so dass durch die Lasche 34 eine erste Drehung des Schlüsselschafts 26 erzwungen ist. Insbesondere sind mehrere Laschen 36 mit Anlageflächen 36 vorgesehen, die immer stärker angeschrägt sind, um eine Drehung des Schlüsselschafts 26 innerhalb des Schlüsselschachts 30 um bis zu ca. 90° zu ermöglichen. Der gleiche Effekt kann durch eine entsprechende Formgestaltung der Gehäuseschale 12 im Bereich des Schlüsselschachts 30 erreicht werden.

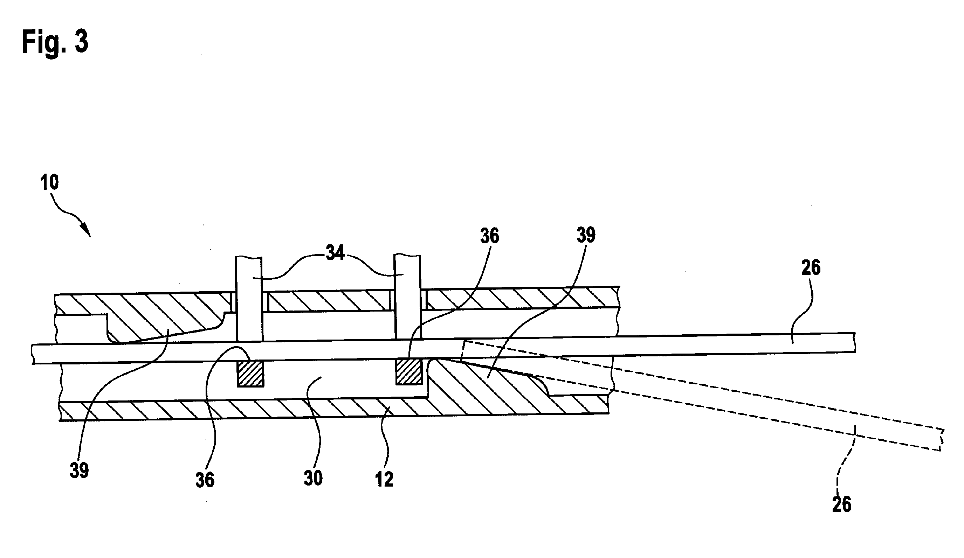

Bei der in Fig. 3 dargestellten Ausführungsform des elektronischen Schlüssels 10 sind durch die Gehäuseschale 12 ausgebildete Rampen 39 vorgesehen, die zusätzlich oder alternativ auch von dem Batteriefachdeckel 16, insbesondere von den Laschen 34, ausgebildet sein können.

Zu Beginn des Einführens des Schlüsselschafts 26 in den Schlüsselschacht 30 ist ein großes Spiel vorgesehen, welches das Einführen der Schlüsselschafts 26 und das Einfädeln des Schlüsselschafts in die Laschen 34 erleichtert. In der Endposition des Schlüsselschafts 26 ist der Schlüsselschaft 26 zwischen den aufeinander zu gerichteten Rampen 38 an einander gegenüberliegenden Seiten des Schlüsselschachts 30 verklemmt, wobei der Schlüsselschaft 26 zuvor die Laschen 34 in den Schlüsselschacht 30 hineinziehen konnte. In dieser Ausführungsform ist es nicht zwingend erforderlich, dass der Schlüsselschaft 26 gedreht wird.

Die Anlageflächen 36 der Laschen 34 brauchen nicht angeschrägt ausgeführt sein.

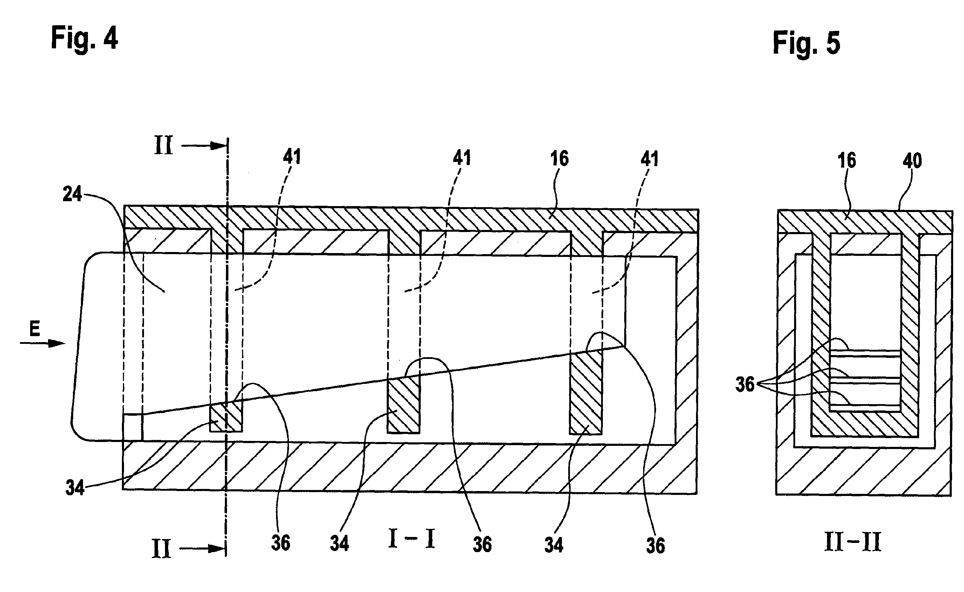

In den Figuren 4 und 5 ist ein drittes Ausführungsbeispiel dargestellt, wobei die Figur 4 ein Schnitt I-I durch den in Figur 1 gezeigten Schlüsselschacht 30 zeigt und in Figur 5 ein Schnitt II-II (siehe Figur 4) durch eine Lasche 36 visualisiert. In Figur 4 ist zusätzlich noch der als Schlüssel ausgebildete Notschlüssel 24 abgebildet. Der Aufbau des dritten Ausführungsbeispiels bleibt im Wesentlichen unverändert. Im Vergleich zum ersten Ausführungsbeispiel (siehe Figur 1) unterscheiden sich die dem Batteriefachdeckel 16 zugeordneten drei Laschen 34 durch ihre geometrische Form, wobei die Öffnungen 41 der Laschen 34 zur Durchführung des Schlüsselschafts 26 unterschiedlich groß zueinander ausgebildet sind. Die Anlagefläche 36 der Laschen 34 im Querschnitt in Einschubrichtung E des Notschlüssels 24 weisen einen schrägen Verlauf auf, wobei im dritten Ausführungsbeispiel die Anlageflächen 36 schräg zu einer geschnittenen Oberflächenebene 40 des Batteriefachdeckels 16 ausgebildet sind. Dadurch wird eine longitudinale Führung des Schlüsselschaft 26 bei einer Bewegung zwischen der Einführposition und der Endposition ermöglicht und/oder erzwingt. In der Endposition weist der Schlüsselschaft 26 mit allen drei Laschen 34 eine keilförmige Verbindung auf, welche zur Erhöhung der von dem Schlüsselschaft 26 aufbringbaren Anpresskraft auf die Dichtung 22 dient. Im dritten Ausführungsbeispiel muss der Schlüsselschaft 26 daher nur in Längsrichtung bzw. Einschubrichtung E bewegt werden. Durch die keilförmige Verbindung zwischen dem Schlüsselschaft 26 und den Laschen 34 wird der Komfort für den Benutzer weiter erhöht, weil er auf eine zusätzliche Rotationsbewegung des Schlüsselschaft 26 verzichten kann, um den Batteriefachdeckel 16 mit der Gehäuseschale 12 staub- und wasserdicht miteinander zu verbinden.

Wie in Figur 4 weiter dargestellt, ragt der Notschlüssel 24 aus dem Schlüsselschacht 30 heraus. Im dritten Ausführungsbeispiel ist es selbstverständlich auch möglich, den Schlüsselkopf des Notschlüssels 24 oberflächenbündig in den Formverlauf der Gehäuseschale 12 zu integrieren

Ferner kann für alle Ausführungsbeispiele noch vorgesehen sein, dass der Notschlüssel 24 zusätzlich mittels einer durch den Benutzer lösbaren Rastverbindung mit dem Schlüsselschacht kraftschlüssig und/oder formschlüssig verbunden wird. Dabei könnte auf der Gehäuseschale 12 und/oder auf dem Schlüsselschacht 26 ein Schieber angeordnet sein, welcher von außen durch einen Benutzer betätigbar ist, um die Rastverbindung zwischen Notschlüssel 24 und Schlüsselschacht 26 aufzuheben. Durch diese Maßnahmen gelingt es, ein Herausfallen des Notschlüssels 24 auch bei einer sich lösenden Verbindung zwischen den Laschen 34 und dem Schlüsselschaft 26 zu vermeiden.

### Bezugszeichenliste

- 10: elektronischer Schlüssel
- 12: Gehäuseschale
- 14: Batteriefach
- 16: Batteriefachdeckel
- 18: Ansatz
- 20: Schlitz
- 22: Dichtung
- 24: Notschlüssel
- 26: Schlüsselschaft
- 28: Betätigungsansatz
- 30: Schlüsselschacht
- 32: Öffnung
- 34: Lasche
- 36: Anlagefläche
- 38: Schmalseite
- 39: Rampe
- 40: Oberflächenebene des Batteriefachdeckels 16
- 41: Öffnung der Lasche 34

## Patentansprüche

1. Elektronischer Schlüssel zum drahtlosen Betrieb eines Schlosses, insbesondere Kraftfahrzeugschloss, mit einer Gehäuseschale (12) zur zumindest teilweisen Aufnahme einer Schaltungselektronik für den drahtlosen Betrieb des Schlosses, wobei die Gehäuseschale (12) ein Batteriefach (14) zur Aufnahme einer Batterie zur Energieversorgung der Schaltungselektronik aufweist, einem Batteriefachdeckel (16) zum Abdecken der in dem Batteriefach (14) aufgenommenen Batterie, einem einen in die Gehäuseschale (12) einsteckbaren Schlüsselschaft (26) aufweisenden Notschlüssel (24) zum mechanischen Betrieb des Schlosses, wobei der Schlüsselschaft (26) zwischen einer Einführposition, in welcher der Schlüsselschaft (26) an einem Schlüsselschacht (30) der Gehäuseschale (12) angesetzt ist, und einer Endposition, in welcher der Schlüsselschaft (26) in dem Schlüsselschacht (30) sicher aufgenommen ist, bewegbar ist, und einer zwischen der Gehäuseschale (12) und dem Batteriefachdeckel (16) angeordneten Dichtung (22) zum Schutz der Batterie vor Umwelteinflüssen, wobei der Batteriefachdeckel (16) eine Anlagefläche (36) zum direkten Kontakt an dem Schlüsselschaft (26) aufweist und der Schlüsselschaft (26) in der Endposition über die Anlagefläche (36) des Batteriefachdeckels (16) eine Anpresskraft auf die Dichtung (22) ausübt, **dadurch gekennzeichnet, dass** der Schlüsselschaft (26) derart ausgeformt ist, dass sich die von dem Schlüsselschaft (26) auf die Anlagefläche (36) des Batteriefachdeckels (16) aufbringbare Kraft zwischen der Einführposition und der Endposition erhöht.

2. Elektronischer Schlüssel nach Anspruch 1 **dadurch gekennzeichnet, dass** der Batteriefachdeckel (16) eine insbesondere ösenförmige Lasche (34) zur Ausbildung der Anlagefläche (36) aufweist.

3. Elektronischer Schlüssel nach Anspruch 1 oder 2 **dadurch gekennzeichnet, dass** die Anlagefläche (36) des Batteriefachdeckels (16) einen Teil einer Begrenzung des Schlüsselschachts (30) ausbildet.

4. Elektronischer Schlüssel nach einem der Ansprüche 1 bis 3 **dadurch gekennzeichnet, dass** der Schlüsselschaft (26) mit einem Schlüsselkopf verbunden ist, wobei der Schlüsselkopf in der Endposition des Schlüsselschafts (26) oberflächenbündig in den Formverlauf der Gehäuseschale (12) integriert ist.

5. Elektronischer Schlüssel nach einem der Ansprüche 1 bis 4 **dadurch gekennzeichnet, dass** der Batteriefachdeckel (16) um eine Schwenkachse schwenkbar mit der Gehäuseschale (12) verbunden ist, wobei das Batteriefach (14) zwischen der Schwenkachse und dem Schlüsselschacht (30) vorgesehen ist.

6. Elektronischer Schlüssel nach einem der Ansprüche 1 bis 5 **dadurch gekennzeichnet, dass** die Gehäuseschale (12) ein in dem Batteriefach (14) vorgesehenes Federelement, insbesondere eine Kontaktfeder zur elektrischen Kontaktierung der Batterie, aufweist, wobei durch das Federelement eine entgegen der von dem Schlüsselschaft (26) aufgebrachten Anpresskraft gerichtete Federkraft auf die Batterie aufbringbar ist.

7. Elektronischer Schlüssel nach einem der Ansprüche 1 bis 6 **dadurch gekennzeichnet, dass** der Schlüsselschaft (26) aus einem im Querschnitt im Wesentlichen recheckigen Grundkörper mit zwei einander gegenüberliegenden Schmalseiten (38) hergestellt ist, wobei der Schlüsselschaft (26) in der Endposition mit einer der Schmalseiten (38) an der Anlagefläche (36) des Batteriefachdeckels (16) und mit der anderen Schmalseite (38) an der Gehäuseschale (12) anliegt.

8. Elektronischer Schlüssel nach einem der Ansprüche 1 bis 7 **dadurch gekennzeichnet, dass** die Gehäuseschale (12) und/oder der Batteriefachdeckel (16) mindestens eine Rampe (38) zur Zwangsführung des Schlüsselschafts (26), insbesondere zur Erhöhung der von dem Schlüsselschaft (26) aufbringbaren Anpresskraft auf die Dichtung (22), aufweist.

9. Elektronischer Schlüssel nach einem der Ansprüche 1 bis 8 **dadurch gekennzeichnet, dass** der Schlüsselschacht (30) eine Drehung des Schlüsselschafts (26) bei einer Bewegung zwischen der Einführposition und der Endposition ermöglicht und/oder erzwingt.

10. Elektronischer Schlüssel nach einem der Ansprüche 1 bis 8 **dadurch gekennzeichnet, dass** der Schlüsselschacht (30) eine longitudinale Führung des Schlüsselschafts (26) bei einer Bewegung zwischen der Einführposition und der Endposition ermöglicht und/oder erzwingt.

11. Elektronischer Schlüssel nach Anspruch 10 **dadurch gekennzeichnet, dass** jeder Lasche (34) eine Öffnung (41) zugeordnet ist und die Öffnungen der jeweiligen Laschen (34) zur Durchführung des Schlüsselschafts (26) unterschiedlich groß zueinander ausgebildet sind.

12. Elektronischer Schlüssel nach Anspruch 10 oder 11 **dadurch gekennzeichnet, dass** die Anlagefläche (36) der Laschen (34) im Querschnitt in Einschubrichtung E des Schlüssels (24) einen schrägen Verlauf aufweisen.

13. Elektronischer Schlüssel nach Anspruch 10 bis 12 **dadurch gekennzeichnet, dass** zumindest in der Endposition der Schlüsselschaft (26) mit mindestens einer Lasche (34) eine keilförmige Verbindung aufweist, welche zur Erhöhung der von dem Schlüsselschaft (26) aufbringbaren Anpresskraft auf die Dichtung (22) dient.

14. Elektronischer Schlüssel nach einem der Ansprüche 1 bis 13 **dadurch gekennzeichnet, dass** der Schlüssel (24) zusätzlich mittels einer durch den Benutzer lösbaren Rastverbindung mit dem Schlüsselschacht (30) und/oder der Gehäuseschale (12) kraftschlüssig und/oder formschlüssig verbindbar ist.

## Claims

1. Electronic key for the wireless operation of a lock, in particular a motor vehicle lock, having a housing shell (12) for the at least partial accommodation of electronic switching circuitry for the wireless operation of the lock, the housing shell (12) having a battery compartment (14) for the accommodation of a battery for supplying power to the electronic switching circuitry, a battery compartment cover (16) for covering the battery accommodated in the battery compartment (14), an emergency key (24), with a key stem (26) that is insertable into the housing shell (12), for the mechanical operation of the lock, the key stem (26) being movable between an insertion position in which the key stem (26) is located on a key shaft (30) of the housing shell (12), and an end position in which the key stem (26) is securely accommodated in the key shaft (30), and a seal (22), arranged between the housing shell (12) and the battery compartment cover (16), for protecting the battery against environmental influences, the battery compartment cover (16) having a bearing surface (36) for direct contact on the key stem (26) and the key stem (26) in the end position exerting a pressure force through the bearing surface (36) of the battery compartment cover (16) on the seal (22), **characterized in that** the key stem (26) is shaped in such a way that the force that can be exerted on the bearing surface (36) of the battery compartment cover (16) by the key stem (26) is increased between the insertion position and the end position.

2. Electronic key according to Claim 1, **characterized in that** the battery compartment cover (16) has an in particular eyelet-shaped lug (34) for the formation of the bearing surface (36).

3. Electronic key according to Claim 1 or 2, **characterized in that** the bearing surface (36) of the battery compartment cover (16) forms a part of the border of the key shaft (30).

4. Electronic key according to one of the Claims 1 to 3, **characterized in that** the key stem (26) is connected to a key bow, the key bow in the end position of the key stem (26) being integrated flush with the surface outline of the housing shell (12).

5. Electronic key according to one of the Claims 1 to 4, **characterized in that** the battery compartment cover (16) is pivotably connected to the housing shell (12) about a pivot axis, the battery compartment (14) being provided between the pivot axis and the key shaft (30).

6. Electronic key according to one of the Claims 1 to 5, **characterized in that** the housing shell (12) has a spring element, in particular a contact spring for an electric contact with the battery, provided in the battery compartment (14), the spring element enabling a spring force to be exerted on the battery which counteracts the pressure force exerted by the key stem (26).

7. Electronic key according to one of the Claims 1 to 6, **characterized in that** the key stem (26) is made from a basic body with an essentially rectangular cross section with two narrow sides (38) arranged opposite one another, the key stem (26) in the end position bearing with one of the narrow sides (38) on the bearing surface (36) of the battery compartment cover (16) and with the other narrow side (38) on the housing shell (12).

8. Electronic key according to one of the Claims 1 to 7, **characterized in that** the housing shell (12) and/or the battery compartment cover (16) have at least one ramp (38) for the forced guidance of the key stem (26), in particular for increasing the pressure force exertable by the key stem (26) on the seal (22).

9. Electronic key according to one of the Claims 1 to 8, **characterized in that** the key shaft (30) enables and/or forces a rotation of the key stem (26) during a movement between the insertion position and the end position.

10. Electronic key according to one of the Claims 1 to 8, **characterized in that** the key shaft (30) enables and/or forces a longitudinal guidance of the key stem (26) during a movement between the insertion position and the end position.

11. Electronic key according to Claim 10, **characterized in that** each lug (34) has an opening (41) assigned to it and that the openings of the respective lugs (34) for the feedthrough of the key stem (26) are embodied in relatively different sizes to one another.

12. Electronic key according to Claim 10 or 11, **characterized in that** the bearing surfaces (36) of the lugs (34) have a slanted cross section in the direction of insertion E of the key (24).

13. Electronic key according to Claims 10 to 12, **characterized in that** the key stem (26) has a cuneiform connection to at least one lug (34) in at least the end position, which connection serves to increase the pressure force exertable by the key stem (26) on the seal (22).

14. Electronic key according to one of the Claims 1 to 13, **characterized in that** the key (24) can additionally be connected to the key shaft (30) and/or the housing shell (12) in a force-fitting and/or form-fitting manner by means of a latching connection that is releasable by the user.

## Revendications

1. Clé électronique pour le fonctionnement sans fil d'une serrure, en particulier d'une serrure de véhicule automobile, comprenant une coque de boîtier (12) pour recevoir au moins partiellement un circuit électronique de commutation pour le fonctionnement sans fil de la serrure, la coque de boîtier (12) comprenant un compartiment de batterie (14) pour recevoir une batterie pour l'alimentation en énergie du circuit électronique de commutation, un couvercle de compartiment de batterie (16) pour recouvrir la batterie reçue dans le compartiment de batterie (14), une clé d'urgence (24) comprenant une tige de clé (26) pouvant être enfichée dans la coque de boîtier (12) pour le fonctionnement mécanique de la serrure, la tige de clé (26) pouvant être déplacée entre une position d'insertion, dans laquelle la tige de clé (26) est placée sur un logement de clé (30) de la coque de boîtier (12), et une position finale, dans laquelle la tige de clé (26) est reçue de manière sûre dans le logement de clé (30), et un joint d'étanchéité (22) disposé entre la coque de boîtier (12) et le couvercle de compartiment de batterie (16) pour protéger la batterie contre des influences environnementales, le couvercle de compartiment de batterie (16) comprenant une surface d'appui (36) pour le contact direct contre la tige de clé (26), et la tige de clé (26) exerçant, dans la position finale, une force de pression sur le joint d'étanchéité (22) par le biais de la surface d'appui (36) du couvercle de compartiment de batterie (16), **caractérisée en ce que** la tige de clé (26) est façonnée de telle sorte que la force pouvant être appliquée par la tige de clé (26) sur la surface d'appui (36) du couvercle de compartiment de batterie (16) augmente entre la position d'insertion et la position finale.

2. Clé électronique selon la revendication 1, **caractérisée en ce que** le couvercle de compartiment de batterie (16) comprend une patte (34) en particulier en forme d'oeillet pour former la surface d'appui (36).

3. Clé électronique selon la revendication 1 ou 2, **caractérisée en ce que** la surface d'appui (36) du couvercle de compartiment de batterie (16) forme une partie d'une limitation du logement de clé (30).

4. Clé électronique selon l'une quelconque des revendications 1 à 3, **caractérisée en ce que** la tige de clé (26) est reliée à une tête de clé, la tête de clé étant, dans la position finale de la tige de clé (26), intégrée en affleurement de surface dans le contour de la forme de la coque de boîtier (12).

5. Clé électronique selon l'une quelconque des revendications 1 à 4, **caractérisée en ce que** le couvercle de compartiment de batterie (16) est relié à la coque de boîtier (12) de manière à pouvoir pivoter autour d'un axe de pivotement, le compartiment de batterie (14) étant prévu entre l'axe de pivotement et le logement de clé (30).

6. Clé électronique selon l'une quelconque des revendications 1 à 5, **caractérisée en ce que** la coque de boîtier (12) comprend un élément de ressort, en particulier un ressort de contact pour la mise en contact électrique de la batterie, prévu dans le compartiment de batterie (14), une force de ressort orientée en sens inverse à la force de pression appliquée par la tige de clé (26) pouvant être appliquée sur la batterie au moyen de l'élément de ressort.

7. Clé électronique selon l'une quelconque des revendications 1 à 6, **caractérisée en ce que** la tige de clé (26) est produite à partir d'un corps de base essentiellement rectangulaire en section transversale comprenant deux côtés étroits (38) opposés l'un à l'autre, la tige de clé (26) s'appliquant, dans la position finale, contre la surface d'appui (36) du couvercle de compartiment de batterie (16) par l'un des côtés étroits (38) et contre la coque de boîtier (12) par l'autre côté étroit (38).

8. Clé électronique selon l'une quelconque des revendications 1 à 7, **caractérisée en ce que** la coque de boîtier (12) et/ou le couvercle de compartiment de batterie (16) comprend/comprennent au moins une rampe (38) pour le guidage forcé de la tige de clé (26), en particulier pour augmenter la force de pression pouvant être appliquée par la tige de clé (26) sur le joint d'étanchéité (22).

9. Clé électronique selon l'une quelconque des revendications 1 à 8, **caractérisée en ce que** le logement de clé (30) rend possible et/ou force une rotation de la tige de clé (26) lors d'un déplacement entre la position d'insertion et la position finale.

10. Clé électronique selon l'une quelconque des revendications 1 à 8, **caractérisée en ce que** le logement de clé (30) rend possible et/ou force un guidage longitudinal de la tige de clé (26) lors d'un déplacement entre la position d'insertion et la position finale.

11. Clé électronique selon la revendication 10, **caractérisée en ce qu'**une ouverture (41) est associée à chaque patte (34) et les ouvertures des pattes (34) respectives sont réalisées sous différentes tailles les unes par rapport aux autres pour le passage de la tige de clé (26).

12. Clé électronique selon la revendication 10 ou 11, **caractérisée en ce que** les surfaces d'appui (36) des pattes (34) présentent une allure inclinée en section transversale dans la direction d'introduction E de la clé (24).

13. Clé électronique selon les revendications 10 à 12, **caractérisée en ce qu'**au moins dans la position finale, la tige de clé (26) présente une liaison cunéiforme avec au moins une patte (34), laquelle liaison sert à augmenter la force de pression pouvant être appliquée par la tige de clé (26) sur le joint d'étanchéité (22).

14. Clé électronique selon l'une quelconque des revendications 1 à 13, **caractérisée en ce que** la clé (24) peut en outre être reliée par engagement par force et/ou par complémentarité de formes, au moyen d'une liaison par encliquetage pouvant être libérée par l'utilisateur, au logement de clé (30) et/ou à la coque de boîtier (12).
